(19) Europäisches Patentamt
European Patent Office
Office européen des brevets

(11) **EP 3 689 826 B1**

(12) **EUROPEAN PATENT SPECIFICATION**

(45) Date of publication and mention
of the grant of the patent:
**12.04.2023 Bulletin 2023/15**

(21) Application number: **20154668.6**

(22) Date of filing: **30.01.2020**

(51) International Patent Classification (IPC):
**C01G 53/00** (2006.01)   **H01M 4/505** (2010.01)
**H01M 4/525** (2010.01)

(52) Cooperative Patent Classification (CPC):
**C01G 53/006; C01G 53/50; H01M 4/505;**
**H01M 4/525;** C01P 2002/20; C01P 2002/85;
C01P 2004/03; C01P 2004/20; C01P 2004/50;
C01P 2004/61; C01P 2004/80; C01P 2006/12;
C01P 2006/14; C01P 2006/40; Y02E 60/10

(54) **POSITIVE ACTIVE MATERIAL FOR RECHARGEABLE LITHIUM BATTERY, METHOD OF PREPARING THE SAME AND RECHARGEABLE LITHIUM BATTERY INCLUIDNG THE SAME**

POSITIVES AKTIVMATERIAL FÜR WIEDERAUFLADBARE LITHIUMBATTERIE, VERFAHREN ZUR HERSTELLUNG DAVON UND WIEDERAUFLADBARE LITHIUMBATTERIE DAMIT

MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2019 KR 20190014092**

(43) Date of publication of application:
**05.08.2020 Bulletin 2020/32**

(73) Proprietor: **Samsung SDI Co., Ltd.**
**Gyeonggi-do 17084 (KR)**

(72) Inventors:
• **Kim, Sungsoo**
 **17084 Yongin-si, Gyeonggi-do (KR)**
• **Kil, Donghyun**
 **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**US-A1- 2015 287 984    US-A1- 2016 211 517**

• **LIUJIANG XI ET AL: "Layered Li2MnO3.3LiNi0.5-xMn0.5-xCo2xO2 microspheres with Mn-rich cores as high performance cathode materials for lithium ion batteries", PHYSICAL CHEMISTRY CHEMICAL PHYSICS, vol. 15, no. 39, 1 January 2013 (2013-01-01), pages 16579-16585, XP055706976, ISSN: 1463-9076, DOI: 10.1039/c3cp51279g**
• **WEST W C ET AL: "Preparation of high quality layered-layered composite LiMnOLiMO(M=Ni, Mn, Co) Li-ion cathodes by a ball milling annealing process", JOURNAL OF POWER SOURCES, ELSEVIER SA, CH, vol. 204, 1 January 2012 (2012-01-01), pages 200-204, XP028453867, ISSN: 0378-7753, DOI: 10.1016/J.JPOWSOUR.2012.01.011 [retrieved on 2012-01-08]**
• **Donghan Kim ET AL: "Composite 'Layered-Layered-Spinel' Cathode Structures for Lithium-Ion Batteries", Journal of The Electrochemical Society, 6 November 2012 (2012-11-06), pages 31-38, XP055231654, DOI: 10.1149/2.049301jes Retrieved from the Internet: URL:http://www.researchgate.net/profile/Gi selle_Sandi/publication/232273027_Stabiliz ed_Layered-Layered-Spinel_Cathode_Material s_for_Lithium-Ion_Batteries/links/0046351b 0fe469f2cf000000.pdf?inViewer=true&pdfJsDo wnload=true&disableCoverPage=true&origin=p ublication_detail [retrieved on 2015-11-26]**

EP 3 689 826 B1

**Description**

**CROSS-REFERENCE TO RELATED APPLICATION**

This application claims priority to and the benefit of Korean Patent Application No. 10-2019-0014092 filed in the Korean Intellectual Property Office on February 01, 2019.

**BACKGROUND OF THE INVENTION**

**(a) Field of the Invention**

A positive active material for a rechargeable lithium battery, a method of manufacturing the same, and a rechargeable lithium battery including the same are disclosed.

**(b) Description of the Related Art**

As portable electronic devices, communication devices, and the like are developed, there are needs for development of a rechargeable lithium battery having a high energy density.

This rechargeable lithium battery includes a positive electrode and a negative electrode which include an electrode active material layer including an electrode active material formed on an electrode current collector. The positive active material is mostly an intercalation material of lithium ions, and may be oxides such as lithium cobalt oxide ($Li_xCoO_2$), lithium nickel oxide ($Li_xNiO_2$), lithium nickel cobalt oxide ($Li_x(NiCo)O_2$), lithium nickel cobalt manganese oxide ($Li_x(NiCoMn)O_2$), spinel-type lithium manganese oxide ($Li_xMn_2O_4$), manganese dioxide ($MnO_2$), or olivine-type or NASICON-type phosphates such as lithium iron phosphate ($Li_xFePO_4$), lithium manganese phosphate ($Li_xMnPO_4$), and the like, silicates, polymer materials, and the like.

The negative electrode active material may be a compound capable of intercalating lithium metal, its alloy or lithium ion, and may be a polymer material or a carbon material, for example a graphite-based material such as artificial or natural graphite, and the like, non-graphitizable carbon, or graphitizable carbon, carbon nanotube (CNT), a carbon nanofiber (CNF), a carbon nanowall (CNW).

The publication Liujiang Xi et al: "Layered Li2MnO3.3LiNi0.5-xMn0.5-xCo2xO2 microspheres with Mn-rich cores as high performance cathode material for lithium ion batteries", Physical Chemistry Chemical Physics, vol. 15, 2013, pages 16579-16585, DOI:10.1039/c3cp51279g discloses microspheres with nanoparticles of $Li_2MnO_3 \cdot 3LiNi_{0.5-x}Mn_{0.5-x}Co_{2x}O_2$ with Mn-rich cores.

The publication W.C. West et al: "Preparation of high quality layered-layered composite Li2MnO3-LiMO2 (M=Mn, Co, Ni) Li-ion cathodes by ball milling-annealing process", Journal of Power Sources, vol. 204, 2012, pages 200-204, doi:10.1016/j.jpowsour.2012.01.011 discloses a preparation method using ball milling and annealing resulting submicron primary particles agglomerated into a wide size distribution of secondary particles.

The US 2016/0211517 A1 discloses a lithium-rich nickel manganese cobalt oxides. The publication Donghan Kim et al "Layered-layered-spinel cathode structures for lithium-ion batteries", Journal of Electrochemical society, vol. 160 (1), pages 31-38, 2013, DOI:10.1149/2.049301jes discloses a layered lithium nickel oxide with $AlF_3$ coating. The US 2015/0287984 A1 disclose a cathode active material with a sinel surface structure formed by fluorine coating. However, the lithium nickel-based composite oxide may have an increased amount of gas which is generated during high temperature storage due to unreacted residual lithium which is produced during a synthesis process thereof and thus a phenomenon of swelling of the battery may occur, resulting in a degradation of the cycle-life characteristics. Therefore, a method for removing unreacted residual lithium is required.

**SUMMARY OF THE INVENTION**

An embodiment of the present invention provides a positive active material for a rechargeable lithium battery having improved charge and discharge capacity, efficiency, and cycle-life characteristics by improving a lithium diffusion degree during charge and discharge, mitigating a stress due to volume changes, and reducing unreacted residual lithium.

Another embodiment provides a method of preparing the positive active material for a rechargeable lithium battery.

Another embodiment provides a rechargeable lithium battery including the positive active material for a rechargeable lithium battery.

A positive active material for a rechargeable lithium battery according to claim 1 is disclosed..

The secondary particle may have a one-centered radial arrangement having one center or a multi-centered radial array structure having a plurality of centers.

The lithium nickel-based composite oxide may have a porosity of about 1 % to about 8 %, preferably of 2 % to 7 %, more preferably of 4 % to 6%.

The positive active material may include about 1,000 ppm or less of unreacted residual lithium at the surface thereof.

The lithium nickel-based composite oxide may have a specific surface area of about 0.4 $m^2$/g to about 1.0 $m^2$/g, preferably of 0.5 $m^2$/g to 0.9 $m^2$/g, more preferably of 0.6 $m^2$/g to 0.8 $m^2$/g.

The lithium manganese composite oxide may be present on the surface of the lithium nickel-based composite oxide.

The lithium manganese composite oxide may be an oxide represented by Chemical Formula 1:

[Chemical Formula 1]     $x\text{LiMnO}_2 \cdot y\text{Li}_4\text{Mn}_5\text{O}_{12} \cdot z\text{LiMn}_2\text{O}_4 \cdot (1-x-y-z)\text{Li}_2\text{MnO}_3$

In Chemical Formula 1, $0 \leq x < 1$, $0 \leq y < 1$, $0 \leq z < 1$, $0 < y+z < 1$, and $0 < x+y+z < 1$.

The lithium manganese composite oxide may have a cubic crystal structure and a monoclinic crystal structure and optionally, an orthorhombic crystal structure.

The lithium manganese composite oxide having the cubic crystal structure may be at least one of $\text{LiMn}_2\text{O}_4$ and $\text{Li}_4\text{Mn}_5\text{O}_{12}$, the lithium manganese composite oxide having the monoclinic crystal structure may be $\text{Li}_2\text{MnO}_3$, and the lithium manganese composite oxide having the orthorhombic crystal structure may be $\text{LiMnO}_2$.

The lithium manganese composite oxide may have an average particle diameter (D50) of less than or equal to about 10 $\mu$m, preferably less than or equal to 8 $\mu$m, more preferably less than or equal to 6 $\mu$m.

The lithium manganese composite oxide may be included in an amount of about 0.25 mol to about 1.5 mol based on 100 mol of the lithium nickel-based composite oxide, preferably of 0.3 mol to 1.2 mol, more preferably of 0.4 mol to 1.0 mol.

The lithium fluoride may be present in a particle shape.

The lithium fluoride may be included in an amount of about 0.25 mol to about 1.0 mol based on 100 mol, preferably of 0.3 mol to 0.8 mol, more preferably of 0.4 mol to 0,6 mol, of the lithium nickel-based composite oxide.

Another embodiment provides a method of preparing the positive active material for a rechargeable lithium battery including mixing a metal hydroxide precursor and a lithium source to prepare a first mixture; first heat-treating the first mixture under a high temperature condition to prepare a first fired product including a lithium nickel-based composite oxide and residual lithium; mixing the first fired product with manganese-based oxide and a fluorine-based organic material to prepare a second mixture; and second heat-treating the second mixture to prepare the positive active material.

The first heat-treating may be performed at about 750 °C to about 950 °C, preferably at 775 °C to 925 °C, more preferably at 800 °C to 900 °C.

The manganese-based oxide may be mixed in an amount of about 0.25 to about 1.5 mol, preferably of 0.3 mol to 1.2 mol, more preferably of 0.4 mol to 1.0 mol, based on 100 mol of the lithium nickel-based composite oxide.

The fluorine-based organic material may be mixed in an amount of about 0.25 to about 1.0 mol, preferably of 0.3 mol to 0.8 mol, more preferably of 0.4 mol to 0.6 mol, based on 100 mol of the lithium nickel-based composite oxide.

The manganese-based oxide may be at least one of $\text{Mn}_2\text{O}_3$, $\text{MnO}$, and $\text{MnO}_2$.

The fluorine-based organic material may be at least one of polyvinylidene fluoride (PVDF), polyvinyl fluoride (PVF), and polytetrafluoro ethylene (PTFE).

The second mixture may further include a lithium source.

The second heat-treating may be performed at about 350 °C to about 450 °C, preferably at 370 °C to 430 °C, more preferably at 390 °C to 410 °C.

Another embodiment provides a rechargeable lithium battery including the positive electrode including a positive active material; a negative electrode; and an electrolyte.

The positive active material according to the present invention includes a lithium nickel-based composite oxide and a lithium manganese composite oxide, and a surface-modifying layer including lithium fluoride on at least one surface thereof, and thereby residual lithium generated during a preparation of the positive active material and thus present on the surface of the positive active material particle and a gas generation amount by a side reaction. Accordingly, it is possible to obtain a rechargeable lithium battery having phase stability and improved cycle-life and capacity characteristics.

## BRIEF DESCRIPTION OF THE DRAWINGS

FIG. 1 is a schematic view showing oriented primary particles constituting a lithium nickel-based composite oxide.

FIG. 2 is a perspective view that schematically shows a representative structure of a rechargeable lithium battery.

FIG. 3 is a graph showing gas generation amounts of coin cells according to Example 1 and Comparative Examples 1 to 3 at high temperature storage.

FIG. 4 is a graph showing cycle-life characteristics at a high temperature of the coin cells manufactured in Example 1, Comparative Example 2, and Comparative Example 3.

FIG. 5 is a graph showing XPS peaks of the positive active material prepared in Example 1 and Comparative Example 1.

FIG. 6 is a view showing surface TOF-SIMS (Time-of-Flight Secondary Ion Mass Spectrometry) analysis results of the positive active materials prepared in Example 1 and Comparative Example 1.

FIG. 7 is an image of Scanning Electron Microscope (SEM) of the positive active material prepared in Example 1.

## DETAILED DESCRIPTION OF THE EMBODIMENTS

Hereinafter, embodiments of the present invention are described in detail. However, these embodiments are exemplary, the present disclosure is not limited thereto and the present disclosure is defined by the scope of claims.

A positive active material for a rechargeable battery according to an embodiment includes a lithium nickel-based composite oxide; and a lithium manganese composite oxide, wherein the positive active material includes a surface-modifying layer including lithium fluoride on the surface of at least one of the lithium nickel-based composite oxide and the lithium manganese composite oxide and the lithium manganese composite oxide has two types or more of crystal structures.

The positive active material may improve structural stability by including the surface-modifying layer. Specifically, cracks of the positive active material generated during the charge and discharge of a rechargeable lithium battery may be suppressed by reducing residual lithium present inside the positive active material and on the surface thereof. Accordingly, a gas generation may be suppressed, and charge and discharge characteristics of a battery may be improved.

The lithium nickel-based composite oxide includes a secondary particle in which a plurality of plate-shaped primary particles are agglomerated, wherein the secondary particle has a regular array structure where (003)-planes of the primary particles are oriented in a vertical direction with respect to the surface of the secondary particle. In other words, the lithium nickel-based composite oxide is formed by secondary particles, in which a plurality of plate-shaped primary particles are agglomerated and are oriented in a vertical direction with respect to the surface of the secondary particle.

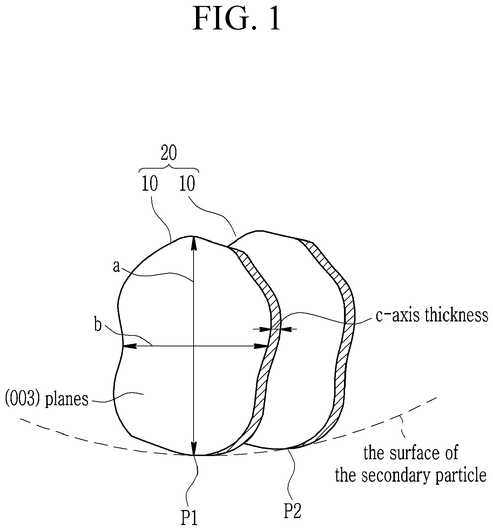

Hereinafter, the lithium nickel-based composite oxide is described referring to FIG. 1.

FIG. 1 shows only secondary particles composed of two primary particles, but it is obvious that three or more primary particles may be agglomerated to form secondary particles. Referring to FIG. 1, (003)-planes of primary particles 10 are oriented in a vertical direction with respect to the surface of the secondary particle. The surface may refer to an outermost surface of the secondary particle. The vertical direction means that a long axis (a axis) or a short axis (b axis) of the (003)-plane and the surface of the secondary particle cross each other at an angle of about 70 ° to about 110 ° for example about 80 ° to about 100 °. When the (003)-planes of the primary particles 10 are oriented so as to be perpendicular to the surface of the secondary particles 20, a relatively large number of lithium diffusion passages between boundaries are formed on a shell side of the secondary particles 20 and a lithium diffusion degree may be increased by externally exposing a large amount of the crystal surface capable of lithium ion transfer, thereby securing high initial efficiency and capacity. In addition, it is possible to suppress the stress caused by volume changes of the secondary particles 20 during charge and discharge to suppress the occurrence of cracks.

As used herein, "a core" refers to a region of about 65 length % to about 85 length % from the center of a total distance from the center to the surface of the secondary particle 20. For example, in the lithium nickel-based oxide, it may be a remaining region except a region within about 2 μm from the outermost surface. In addition, "a shell (external part)" refers to a region of about 5 length % to about 15 length % from the outermost surface of a total surface from the center to the surface of the lithium nickel-based oxide or within 2 μm of the outermost surface of the lithium nickel-based oxide. An "intermediate layer" refers to remaining regions except for the core and the shell. As used herein, the orientation of primary particles 10 may be predominantly in shells of the secondary particle 20.

The secondary particle may have a one-centered radial arrangement having one center or a multi-centered radial array structure having a plurality of centers. Specifically, the plurality of primary particles 10 may be oriented toward one center so as to form a face contact along the c-axis (thickness) direction of the primary particles 10, to provide the secondary particle 20 having a radial array structure. In another embodiment, the secondary particle 20 may have a multi-centered radial array structure having a plurality of centers.

When the secondary particle 20 has a one-centered or multi-centered radial array structure as described above, lithium may be easily intercalated/ deintercalated into the center of the secondary particle 20.

The lithium nickel-based composite oxide may be a porous particle including a plurality of pores therein. A total porosity may be greater than or equal to about 1 %, greater than or equal to about 1.5 %, greater than or equal to about 2.0 %, or greater than or equal to about 2.5 %, and less than or equal to about 8 % and less than or equal to about 7.5 %, less than or equal to about 7.0 %, or less than or equal to about 6.5 %. The lithium nickel-based composite oxide may include pores therein and thereby the pores may effectively accommodate changes in the structure of during charge and discharge of the composite positive active material.

On the other hand, the porosity is used in the same sense as a pore volume fraction and is shown as a ratio of an area occupied by pores relative a total area of the lithium nickel-based composite oxide.

The lithium nickel-based composite oxide may have a specific surface area of about 0.4 $m^2/g$ to about 1.0 $m^2/g$.

An unreacted residual lithium content present on the surface of the composite positive active material may be less than or equal to about 1,000 ppm, for example less than or equal to about 990 ppm, less than or equal to about 980 ppm, or less than or equal to about 970 ppm.

In an embodiment, the specific surface area may be measured in a Brunauer-Emmett-Teller (BET) method. For example, a BET 6-point method may be used according to a nitrogen gas adsorption method by using a porosimetry analyzer (Belsorp-II Mini, Bell Japan Inc.).

The residual lithium content is a lithium content calculated from contents of $Li_2CO_3$ and LiOH remaining in the positive active material. Generally, a large particle size of a positive active material is desirable for high capacity of a battery, but in this case, since a specific surface area is relatively small, there is a problem that rate capability and initial capacity may be decreased due to a reduction of the active area contacting an electrolyte solution. In order to solve this problem, the lithium nickel-based composite oxide including secondary particles in which a plurality of plate-shaped primary particles are agglomerated is used as a positive active material in an embodiment and thus a specific surface area thereof may be improved. However, as for secondary particles having a developed surface orientation, lithium ions react with moisture or $CO_2$ in the air and thus may easily form impurities such as $Li_2CO_3$, LiOH, and the like, while moving on the surface of the active material, and these surface impurities may deteriorate battery capacity or may be decomposed inside a battery, and thus generate gas and cause a battery swelling phenomenon. Accordingly, high temperature stability of a rechargeable battery may be deteriorated. Accordingly, the lithium manganese composite oxide and the lithium fluoride according to an embodiment may be formed through a reaction of the unreacted residual lithium on the surface of the secondary particles with at least one of manganese-based oxide (e.g., $Mn_2O_3$) and a fluorine-based organic material and thus may improve the aforementioned problem.

In addition, as a specific surface area of the nickel-based oxide having an improved surface orientation is increased, the residual lithium reacts with electrolyte solution, moisture or air and thus generates gas inside a cell, and accordingly, a cycle-life of a battery may be shortened. However, in the positive active material according to an embodiment, when the residual lithium on the surface of the lithium nickel-based oxide composite oxide is removed, and simultaneously, the specific surface area is within the range, the gas generation amount may be reduced, and thus capacity and efficiency of a battery may be improved.

The positive active material according to an embodiment includes the lithium manganese composite oxide having two types or more of crystal structures. The lithium manganese composite oxide may be present on the surface of the lithium nickel-based composite oxide. In some embodiments, for example, the lithium manganese composite oxide may be arranged discontinuously in a type of an island on the surface of the lithium nickel-based composite oxide. In some embodiments, the lithium manganese composite oxide may form a substantially uniform or substantially continuous coating layer on the outer surface of the lithium nickel-based composite oxide. Further, in some embodiments when the coating layer is substantially continuous, the lithium manganese composite oxide may substantially cover the entire surface of the lithium nickel-based composite oxide. Therefore, residual lithium may be reduced and side reactions with the electrolyte solution may be suppressed, thereby reducing gas generation.

The lithium manganese composite oxide may be represented by Chemical Formula 1:

[Chemical Formula 1]    $xLiMnO_2 \cdot yLi_4Mn_5O_{12} \cdot zLiMn_2O_4 \cdot (1-x-y-z)Li_2MnO_3.$

In Chemical Formula 1, $0 \leq x < 1$, $0 \leq y < 1$, $0 \leq z < 1$, $0 < y+z < 1$, and $0 < x+y+z < 1$.

In addition, the lithium manganese composite oxide has two types or more of crystal structures. For example, the lithium manganese composite oxide may include a cubic crystal structure and a monoclinic crystal structure, and optionally an orthorhombic crystal structure.

The lithium manganese oxide having the cubic crystal structure may be at least one of $LiMn_2O_4$ and $Li_4Mn_5O_{12}$, the lithium manganese oxide having the monoclinic crystal structure may be $Li_2MnO_3$, and the lithium manganese oxide having the orthorhombic crystal structure may be $LiMnO_2$.

When the lithium manganese composite oxide has the composition or the crystal structure, amounts of residual lithium on the surface of the positive active material surface may be reduced and side reactions with an electrolyte may be suppressed to prevent a gas generation.

On the other hand, the crystal structure of the lithium manganese composite oxide may be confirmed through transmission electron microscopy (TEM). A concentration of each element such as lithium fluoride on the surface may be measured through X-ray photoelectron spectroscopy (XPS), transmission electron microscopy, or energy dispersive X-ray spectroscopy (EDS). In addition, the unreacted residual lithium on the surface of the lithium nickel-based oxide may be measured by using an inductively coupled plasma-atomic emission spectrometer (ICP-AES).

The lithium manganese composite oxide may have an average particle diameter (D50) of less than or equal to about 10 $\mu$m, for example less than or equal to about 9 $\mu$m, less than or equal to about 8 $\mu$m, less than or equal to about 7 $\mu$m, or less than or equal to about 6 $\mu$m. When the average particle diameter of the lithium manganese composite oxide is within the ranges, the amounts of residual lithium and generated gas may be reduced.

The lithium manganese composite oxide may be included in an amount of greater than or equal to about 0.25 mol, for example greater than or equal to about 0.30 mol, greater than or equal to about 0.35 mol, or greater than or equal to about 0.40 mol and less than or equal to about 1.5 mol, for example 1.4 mol, less than or equal to about 1.2 mol, less than or equal to about 1.1 mol, less than or equal to about 1.0 mol, less than or equal to about 0.9 mol, less than or equal to about 0.7 mol or less than or equal to about 0.5 mol based on 100 mol of the lithium nickel-based composite oxide. When the mole amount of the lithium manganese composite oxide is within the ranges, the amounts of residual lithium and generated gas may be reduced. However, when the lithium manganese composite oxide is excessively included out of the mole amount range without a surface-modifying layer including lithium fluoride, battery capacity may be decreased, and adherence of an electrode plate may be deteriorated. In other words, as illustrated later, compared with when the lithium manganese composite oxide alone is included, when a mixture of the lithium manganese composite oxide with the lithium fluoride is included, excellent residual lithium-reducing and gas generation-reducing effects may be obtained with a relatively small amount, and accordingly, the aforementioned battery capacity deterioration and electrode plate adherence deterioration problems may be solved.

The surface-modifying layer includes lithium fluoride. The lithium fluoride is included in the surface-modifying layer of the positive active material and thus may suppress generation of the residual lithium, a side reaction with an electrolyte solution, and the gas generation.

The lithium fluoride may be present as a particle shape. In addition, the lithium fluoride may be included in an amount of greater than or equal to about 0.25 mol, for example, greater than or equal to about 0.30 mol, greater than or equal to about 0.35 mol, or greater than or equal to about 0.40 mol and less than or equal to about 1.00 mol, less than or equal to about 0.90 mol, less than or equal to about 0.80 mol, less than or equal to about 0.70 mol, less than or equal to about 0.60 mol, or less than or equal to about 0.50 mol, and specifically, about 0.20 to about 0.50 mol based on 100 mol of the lithium nickel-based composite oxide. When the lithium fluoride is included within the content ranges, the residual lithium generation and the gas generation on the surface of the active material may be suppressed. However, when the lithium fluoride alone is excessively included without mixing with the lithium manganese composite oxide, high temperature cycle-life characteristics of a battery may be deteriorated, and battery resistance may be increased. In other words, compared with when the lithium fluoride alone is included, when the lithium fluoride as a mixture with the lithium manganese composite oxide is included in a positive active material, very excellent residual lithium and gas generation-reducing effects may be obtained with a small amount, and the aforementioned high temperature cycle-life characteristics and battery resistance may be improved.

Another embodiment provides a method of preparing the positive active material for a rechargeable lithium battery including mixing a metal hydroxide precursor and a lithium source to prepare a first mixture; first heat-treating the first mixture under a high temperature condition to prepare a first fired product including residual lithium; mixing the first fired product with a manganese-based oxide and a fluorine-based organic material to prepare a second mixture; and second heat-treating the second mixture to prepare a second fired product.

First, the metal hydroxide precursor is prepared.

The metal hydroxide precursor may be prepared through each first, second, and third step process of forming a core, an intermediate layer, and a shell. In the first, second, and third steps, process conditions such as a concentration and an input of a metal raw material, a concentration and an input of ammonia water as a complex agent, an input of a pH controlling agent, and the like may be changed.

As used herein, "a core" refers to a region corresponding to about 65 length % to about 85 length % from the center of a total distance from the center to the surface of the secondary particle 20. For example, in the metal hydroxide precursor, it may be a remaining region except a region within about 2 $\mu$m from the outermost surface. In addition, "a shell (external part)" refers to a region of about 5 length % to about 15 length % from the outermost surface of a total surface from the center to the surface of the metal hydroxide precursor or within about 2 $\mu$m of the outermost surface of the metal hydroxide precursor. An "intermediate layer" refers to a remaining region except for the core and the shell in the secondary particle 20.

The first step is a step of forming the core of the metal hydroxide precursor.

First, the complex agent and the pH controlling agent are put in a reactor, and the metal raw materials are added thereto and reacted. When pH of the reaction mixture in the reactor is changed as the reaction goes, the pH controlling agent may be further added thereto to control pH. Specifically, a concentration of the complex agent may be about 0.1 M to about 0.7 M, for example, about 0.2 M to about 0.5 M. The input amount of the complex agent may be in a range of about 8 ml/min to about 12 ml/min. Concentrations of the metal raw materials may be about 0.1 M to about 0.5 M, for example, about 0.3 M. The input amounts of the metal raw materials may be in a range of about 50 ml/min to about 100 ml/min.

The second step is a step of forming the intermediate layer of the metal hydroxide precursor.

The metal raw materials and the complex agent are added to a resulting material of the first step reaction to control pH of the reaction mixture, and then, a reaction of the second step is performed. Particularly, in the second step, the input amount and the concentration of the metal raw materials and the complex agent are increased in order to prevent a growth rate decrease of particles after reacting the product from the first step for a predetermined time. Specifically, a concentration of the complex agent may be for example about 0.3 M to about 1.0 M, the input amount of the complex agent may be in a range of about 8 ml/min to about 15 ml/min, and the metal raw materials may have concentrations of about 0.1 M to about 0.5 M, for example, about 0.3 M, the input amounts of the metal raw materials may be in a range of about 90 ml/min to about 120 ml/min.

The third step is a step of forming the shell of the metal hydroxide precursor and finally forming the metal hydroxide precursor.

The input amounts and the concentrations of the metal raw materials and the complex agent are increased in order to prevent a growth rate decrease of particles after reacting a reaction product from the second step for a predetermined time. Specifically, the concentration of the complex agent may be in a range of about 0.35 M to about 1.0 M, the input amount of the complex agent may be in a range of about 12 ml/min to about 20 ml/min, and the metal raw materials may have concentrations of about 0.1 M to about 0.5 M, for example, about 0.3 M, the input amounts of the metal raw materials may be in a range of about 120 ml/min to about 150 ml/min. On the other hand, a reaction condition of the third step has a large influence on a surface depth of a porous layer of the metal hydroxide precursor.

The first to third steps share the following common conditions.

In each step, an agitation power is in a range of about 0.1 kW/m$^3$ to about 6 kW/m$^3$, for example, about 1 kW/m$^3$ to about 3 kW/m$^3$. In the second and third steps, the agitation power may be decreased compared with that of the first step, but the agitation power of the second and third steps may be the same.

The pH of the reaction mixture may be adjusted in a range of about 10 to about 12. Particularly, the pH controlling agent may control the pH of the reaction mixture to form a precipitate from the reaction mixture, for example sodium hydroxide (NaOH), sodium carbonate ($Na_2CO_3$), sodium oxalate ($Na_2C_2O_4$), and the like, and the sodium hydroxide (NaOH) may be used preferably.

The concentration of the complex agent increases sequentially from the first step toward the second step and then the third step and may be for example about 0.1 M to about 0.7 M. Particularly, a complex agent plays a role in controlling a reaction rate of formation of a precipitate in a co-precipitation reaction, and may be ammonia water and citric acid and in an embodiment, may be preferably ammonia water. On the other hand, an amount of the complex agent is used at a general level.

Meanwhile, the porosity inside the metal hydroxide precursor particles is affected by the time of applying each step described above.

Since pores between (001)-crystal planes are appropriately maintained due to a minimized exposure of a (001)-crystal plane, the metal hydroxide precursor may have excellent structural stability.

The metal hydroxide precursor may be for example a compound represented by Chemical Formula 2.

[Chemical Formula 2] $\quad\quad (Ni_{1-x-y-z}Co_xMn_yM_z)(OH)_2$

In Chemical Formula 2, M is one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al), $x \leq (1-x-y-z)$, $y \leq (1-x-y-z)$, $0 < x < 1$, $0 \leq y < 1$, and $0 \leq z < 1$. In addition, in Chemical Formula 2, $0 < x \leq 0.33$, $0 \leq y \leq 0.5$, $0 \leq z \leq 0.05$, and $0.33 \leq (1-x-y-z) \leq 0.95$. In Chemical Formula 2, $0.5 \leq (1-x-y-z) \leq 0.95$.

The metal hydroxide precursor represented by Chemical Formula 2 may be for example $Ni_{0.6}Co_{0.2}Mn_{0.2}(OH)_2$, $Ni_{0.5}Co_{0.2}Mn_{0.3}(OH)_2$, $Ni_{1/3}Co_{1/3}Mn_{1/3}(OH)_2$ $Ni_{0.8}Co_{0.1}Mn_{0.1}(OH)_2$, or $Ni_{0.85}Co_{0.1}Al_{0.05}(OH)_2$.

Hereinafter, a method of preparing the positive active material for a rechargeable lithium battery is described.

First, the metal hydroxide precursor and a lithium source are mixed to prepare a first mixture.

The lithium source may be for example lithium hydroxide, lithium fluoride, lithium carbonate, or a mixture thereof.

A mixing ratio of lithium source and metal hydroxide precursor is controlled stoichiometrically to produce the lithium nickel-based composite oxide of Chemical Formula 3:

[Chemical Formula 3] $\quad\quad Li_a(Ni_{1-x-y-z}Co_xMn_yM_z)O_2$

In Chemical Formula 3, $0.95 \leq a \leq 1.3$, $x \leq (1-x-y-z)$, $y \leq (1-x-y-z)$, $0 < x < 1$, $0 \leq y < 1$, and $0 \leq z < 1$.

In Chemical Formula 3, M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminum (Al). In addition, in Chemical Formula 3, $0.95 \leq a \leq 1.3$, for example $1.0 \leq a \leq 1.1$, $0 < x \leq 0.33$, for example $0 < x \leq 0.33$, $0 \leq y \leq 0.5$, $0 \leq z \leq 0.05$, and $0.33 \leq (1-x-y-z) \leq 0.95$. In Chemical Formula 3, $0.5 \leq (1-x-y-z) \leq 0.95$.

The lithium nickel-based composite oxide of Chemical Formula 3 may be for example $LiNi_{0.6}Co_{0.2}Mn_{0.2}O_2$, $LiNi_{0.5}Co_{0.2}Mn_{0.3}O_2$, $LiNi_{1/3}Co_{1/3}Mn_{1/3}O_2$, $LiNi_{0.8}Co_{0.1}Mn_{0.1}O_2$, or $LiNi_{0.85}Co_{0.1}Al_{0.05}O_2$.

The mixing may be dry mixing or may be performed using a mixer or the like. The dry mixing may be performed using milling. When the milling is performed so that the metal hydroxide precursor used as the starting material is hardly deformed such as pulverization. For this purpose, it is necessary to control a size of the lithium source mixed with the metal hydroxide precursor in advance. The lithium source may have a size (average particle diameter) of about 5 $\mu$m to about 20 $\mu$m, for example about 10 $\mu$m. When the internal temperature of the mixer is increased above 30 °C during the above milling process, the internal temperature of the mixer may be cooled to maintain it at room temperature, 25 °C.

The first mixture is first heat-treated under a high temperature condition to prepare a first fired product including lithium nickel-based composite oxide and residual lithium.

The first heat-treating may be performed at a high temperature of about 750 °C to about 950 °C, for example, about 800 °C to about 900 °C. In the first heat-treating, a temperature-increasing rate may be about 1 °C/min to about 5 °C/min, for example, about 3 °C/min. The first heat-treating time may be changed depending on the first heat-treating temperature and the like, for example, in a range of about 3 hours to about 10 hours, preferably 4 hours to about 8 hours, more preferably 5 hours to about 6 hours.

The first heat-treating may be performed under an oxidizing gas atmosphere having an oxygen content of about 40 volume% to about 100 volume%.

The obtained first fired product is mixed with the lithium nickel-based composite oxide, the manganese-based oxide, and the fluorine-based organic material in a predetermined mole ratio to obtain a second mixture.

The mixing may be dry mixing or may be performed using a mixer or the like. The dry mixing may be performed by using milling.

The manganese-based oxide may be mixed in an amount of about 0.25 mol to about 1.5 mol, for example, about 0.25 mol to about 0.5 mol based on 100 mol of the lithium nickel-based composite oxide.

In addition, the fluorine-based organic material may be mixed in an amount of about 0.25 mol to about 1.0 mol, for example, about 0.25 mol to about 0.5 mol based on 100 mol of the lithium nickel-based composite oxide.

When the mixed mole ratios of the lithium nickel-based composite oxide and the manganese-based oxide and the fluorine-based organic material are in the ranges, the unreacted residual lithium may be reduced and the capacity characteristics and structure stability of the battery may be effectively improved.

The second mixture may further include a lithium source. When nickel among metal elements of the metal hydroxide precursor is included in a low content, a generation amount of the residual lithium may be small, and accordingly, the same lithium source as included in the first mixture may be added to the second mixture.

The second mixture is subjected to the second heat-treating to prepare the second fired product.

The second heat-treating may be performed, for example, at about 350 °C to about 450 °C and for example, at about 400 °C. In addition, during the second heat-treating, a temperature-increasing rate may be about 1 °C/min to about 5 °C/min, for example, about 3 °C/min. A second heat-treating time is variable for a second heat-treating temperature but may be performed for example about 3 hours to 10 hours, preferably 4 hours to about 8 hours, more preferably 5 hours to about 6 hours. When the second heat-treating temperature is within the ranges, the unreacted residual lithium may be reduced, and the gas generation may be reduced by reducing a side reaction of a positive active material with an electrolyte solution.

The second heat-treating may be performed under an oxidizing gas atmosphere including about 40 volume% to about 100 volume% of oxygen like in the first heat-treating.

Another embodiment provides a rechargeable lithium battery including a positive electrode including the positive active material, a negative electrode, and an electrolyte.

The positive electrode and the negative electrode according to another embodiment are manufactured by applying each of a composition for forming a positive active material layer and a composition for forming a negative active material layer on a current collector, and drying the composition.

The composition forming the positive active material layer is prepared by mixing a positive active material, a conductive agent, a binder, and a solvent, and the positive active material is as described above.

The binder is a component that assists in binding of the active material to the conductive agent and to the current collector. Non-limiting examples of the binder may be polyvinylidene fluoride, polyvinyl alcohol, carboxylmethyl cellulose (CMC), starch, hydroxypropyl cellulose, regenerated cellulose, polyvinylpyrrolidone, tetrafluoroethylene, polyethylene, polypropylene, an ethylene-propylene-diene terpolymer (EPDM), sulfonated EPDM, a styrene butadiene rubber, a fluoro rubber, or various copolymers. An amount of the binder may be about 2 to about 5 parts by weight based on a total weight, 100 parts by weight of the positive active material. When the amount of the binder is in the above range, a binding force of the active material layer to the current collector is improved.

The conductive agent may be not particularly limited as long as it has electron conductivity without causing chemical changes in a battery and may be, for example graphite such as natural graphite or artificial graphite; a carbon-based material such as carbon black, acetylene black, ketjen black, channel black, furnace black, lamp black, thermal black and the like; a conductive fiber such as a carbon fiber or a metal fiber; carbon fluoride; a metal powder such as aluminum or a nickel powder; a conductive whisker such as zinc oxide, or potassium titanate; a conductive metal oxide such as titanium oxide; a conductive material such as a polyphenylene derivative. An amount of the conductive agent may be about 2 to about 5 parts by weight based on a total weight, 100 parts by weight of the positive active material. When the amount of the conductive agent is in the above range, conductivity of the finally obtained electrode is improved.

Non-limiting examples of the solvent include N-methylpyrrolidone and the like. When the amount of the solvent is in the range, it is easy to work to form the active material layer.

The positive current collector is about 3 $\mu$m to about 500 $\mu$m thick and is not particularly limited if it has high conductivity without causing chemical changes in the battery, and may be for example, stainless steel, aluminum, nickel, titanium, heat-treated carbon, or aluminum or stainless steel which is surface-treated with carbon, nickel, titanium, silver, and the like. The current collector may form a fine concavo-convex on its surface to enhance an adherence of positive active materials and may be in various forms such as films, sheets, foils, nets, porous bodies, foams and nonwoven fabric bodies.

Separately, a composition for forming a negative active material layer is prepared by mixing a negative active material, a binder, a conductive agent, and a solvent. The negative active material is a material capable of intercalating and releasing lithium ions. As non-limiting examples of the negative active material, a carbon-based material such as graphite or carbon, a lithium metal, an alloy thereof, and a silicon oxide-based material may be used. According to an embodiment of the present invention, silicon oxide may be used.

In an embodiment, the positive active material may be a mixture of a large-diameter active material and a small-diameter active material. As in above, when a mixture of the large-diameter active material and the small-diameter active material is used as the positive active material, the capacity of the lithium secondary battery may be further increased.

The large-diameter active material may have an average particle diameter (D50) of about 10 $\mu$m to about 20 $\mu$m, and the small-diameter active material may have an average particle diameter (D50) of about 2 $\mu$m to about 9 $\mu$m. When the large-diameter active material and the small-diameter active material have average particle diameters within the foregoing ranges, it may provide a particle distribution having an appropriate or suitable density (g/cc). In this case, the large-diameter active material and the small-diameter active material may be mixed to a weight ratio of about 70 : 30 to about 90 : 10. When the mixing ratio of the large-diameter active material and small-diameter active material is within the foregoing range, it may provide a very high density (g/cc) on forming a positive electrode layer.

The binder, the conductive agent, and the solvent may be the same types of materials as the positive electrode. The binder is added in an amount of about 1 to about 50 parts by weight based on a total weight, 100 parts by weight of the negative active material. The conductive agent is added in an amount of about 1 to about 5 parts based on a total weight, 100 parts by weight of the negative active material. When the amount of the conductive agent is in the range, conductivity characteristics of the finally obtained electrode are improved. An amount of the solvent is about 1 to about 10 parts by weight based on 100 parts by weight of the negative active material. When the amount of the solvent is in the range, it is easy to work to form the negative active material layer.

The negative current collector is about 3 $\mu$m to about 500 $\mu$m thick. Such a negative current collector is not particularly limited if it has high conductivity without causing chemical changes in the battery and may be, for example, copper, stainless steel, aluminum, nickel, titanium, heat-treated carbon, copper or stainless steel which is surface-treated with carbon, nickel, titanium, silver, and the like, an aluminum-cadmium alloy, and the like. In addition, the negative current collector may form a fine concavo-convex on its surface to enhance an adherence of negative active materials and may be in various forms such as films, sheets, foils, nets, porous bodies, foams and nonwoven fabric bodies, like the positive current collector.

A separator may be disposed between the positive electrode and the negative electrode according to the procedure. The separator has a pore diameter of about 0.01 $\mu$m to about 10 $\mu$m and a thickness of about 5 $\mu$m to about 300 $\mu$m. Specific examples may include polypropylene, polyethylene and the like olefin based polymer; or a sheet made of a glass fiber or a non-woven fabric. When a solid electrolyte such as a polymer is used as the electrolyte, a solid electrolyte may also serve as a separator.

The electrolyte may be a non-aqueous electrolyte including a non-aqueous solvent and a lithium salt, an organic solid electrolyte, an inorganic solid electrolyte, and the like. The non-aqueous solvent may be for example, a aprotic organic solvent such as N-methyl-2-pyrrolidinone, propylene carbonate, ethylene carbonate, butylene carbonate, dimethyl carbonate, diethyl carbonate, gamma-butyro lactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like. The lithium salt is a material that is dissolved in the non-aqueous electrolyte and non-limiting examples

thereof may be LiCl, LiBr, Lil, LiClO4, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic lithium carboxylate, tetraphenyl lithium borate, LiFSI (lithium fluorosulfonyl imide), and the like.

The organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, and the like.

The inorganic solid electrolyte may be $Li_3N$, Lil, $Li_5NI_2$, $Li_3N$-Lil-LiOH, $LiSiO_4$, $LiSiO_4$-Lil-LiOH, $Li_2SiS_3$, $Li_4SiO_4$, $Li_4SiO_4$-Lil-LiOH, $Li_3PO_4$-$Li_2S$-$SiS_2$, and the like.

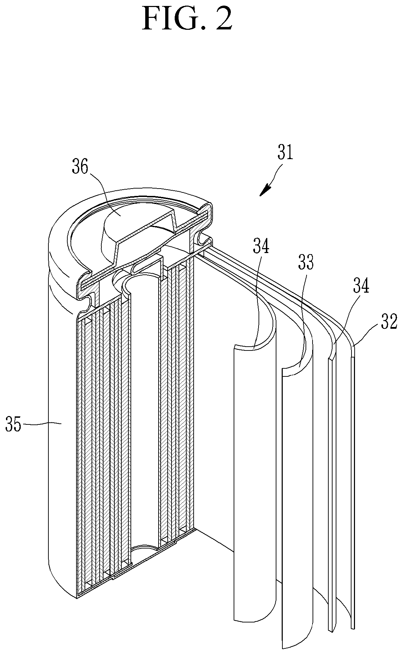

FIG. 2 is a perspective view that schematically shows a representative structure of a rechargeable lithium battery.

Referring to FIG. 2, a rechargeable lithium battery 31 includes a positive electrode 33 including the positive active material according to an embodiment, a negative electrode 32, and a separator 34. The positive electrode 33, the negative electrode 32, and the separator 34 are wound or folded to be housed in a battery case 35. Then, an organic electrolyte solution is injected and sealed in the battery case 35 with a cap assembly 36 to complete a rechargeable lithium battery 31. The battery case 35 may be cylindrical, prismatic, thin film-type, and the like.

The rechargeable lithium battery may be a lithium ion battery.

A separator may be disposed between the positive electrode and the negative electrode and wound or laminated to form an electrode assembly. The electrode assembly is housed in the case, impregnated into the organic electrolyte solution, and the resultant is sealed to complete a rechargeable lithium battery.

Also, the rechargeable lithium battery forms a battery pack with a circuit, and a single or multiple pack may be used for all devices requiring high capacity and high power as needed. For example, it may be used for a laptop, a smart phone, electric vehicle and so on. In addition, the rechargeable lithium battery has excellent storage stability, cycle-life characteristics, and high-rate characteristics at high temperatures, and thus may be used in an electric vehicle (EV). For example, it may be used for a hybrid vehicle such as a plug-in hybrid electric vehicle (PHEV).

The present invention is explained in more detail in the following examples and comparative examples. It is to be understood, however, that the examples are for the purpose of illustration and are not to be construed as limiting the present invention.

**Examples**

**Example 1**

**Example 1-1: Synthesis of Metal Hydroxide Precursor ($Ni_{0.6}Co_{0.2}Mn_{0.2}(OH)_2$)**

In the following preparing process, nickel sulfate, cobalt sulfate, and manganese sulfate were used as metal raw materials for forming metal hydroxide precursors.

[First Step: 1.5kW/m$^3$, $NH_3 \cdot H_2O$ 0.30 M, pH 10 to 11, reaction time 6 hours]

First, ammonia water ($NH_3 \cdot H_2O$) having a concentration of 0.30 M was put in a reactor. While a metal raw materials and a complex agent (ammonia water) were added thereto respectively at 90 ml/min and 10 ml/min at 50 °C under an agitation power of 1.5 kW/m$^3$, a reaction was started. While NaOH was added thereto to maintain pH, the reaction was performed for 6 hours. Core particles obtained as a reaction result had an average size of about 5.5 $\mu$m to 6.5 $\mu$m and then, moved toward a second step.

[Second Step: 1.0 kW/m$^3$, $NH_3 \cdot H_2O$ 0.35 M, pH 10 to 11, reaction time 6 hours]

The metal raw materials and the complex agent were added thereto respectively at 100 ml/min and 15 ml/min, while the reaction temperature was maintained at 50 °C, so that a concentration of the complex agent may be 0.35 M. While NaOH was added thereto in order to maintain pH, the reaction was performed for 6 hours. Herein, the reaction was performed by lowering the agitation power by 1.0 kW/m$^3$ than that of the first step. Particles having a core and an intermediate layer produced from this reaction had an average size of 9 $\mu$m to 10 $\mu$m, and then, a third step was performed as follows.

[Third Step: 1.0 kW/m$^3$, $NH_3 \cdot H_2O$ 0.40 M, pH 10 to 11, reaction time 4 hours]

The metal raw and the complex agent were added thereto respectively at 150 ml/min and 20 ml/min, while the reaction temperature was maintained at 50 °C, so that a concentration of the complex agent may be 0.40 M. While NaOH was added thereto in order to maintain pH, the reaction was performed for 4 hours. Herein, the agitation power was maintained equally to that of the second step.

[Post Process]

As for a post process, the resulting material was washed and hot air-dried at about 150 °C for 24 hours to obtain a metal hydroxide precursor ($Ni_{0.6}Co_{0.2}Mn_{0.2}(OH)_2$).

**Example 1-2: Preparation of Positive Active Material**

The metal hydroxide precursor ($Ni_{0.6}Co_{0.2}Mn_{0.2}(OH)_2$) obtained according to Example 1-1 and lithium hydroxide (LiOH) were mixed to have a mole ratio of Li : (Ni + Co + Mn) of 1:1 by using a high speed mixer at 2,000 rpm and then, first heat-treated at about 860 °C for 8 hours under an oxidizing gas atmosphere having 95 % of an oxygen concentration to obtain a lithium nickel-based composite oxide ($LiNi_{0.6}Co_{0.2}Mn_{0.2}O_2$).

The lithium nickel-based composite oxide, manganese(III) oxide ($Mn_2O_3$), and polyvinylidene fluoride (PVdF) were dry-mixed in a mole ratio of 1:0.005:0.0025 by using the high speed mixer at 2,000 rpm and second heat-treated at about 400 °C for 6 hours under an oxidizing gas atmosphere having 95 % of an oxygen concentration to obtain a positive active material.

**Example 1-3: Manufacture of Coin Cell**

The positive active material according to Example 1-2, a carbon black carbon conductive agent (Product name: Denka Black, Denka Korea Co., Ltd.), and polyvinylidene fluoride (PVdF) were mixed in a weight ratio of 92:4:4, and then, the obtained mixture was mixed with N-methylpyrrolidone (NMP) to prepare slurry. The slurry was bar-coated on a 15 $\mu$m-thick aluminum current collector, vacuum-dried at room temperature, dried again at 120 °C, compressed, and punched to manufacture a 45 $\mu$m-thick positive electrode plate.

The manufactured electrode plate, a lithium metal as a counter electrode, a PTFE separator, and an electrolyte solution prepared by dissolving 1.5 M $LiPF_6$ in a mixed solvent of EC (ethylene carbonate), DEC (diethyl carbonate), and EMC (ethylmethyl carbonate) (a volume ratio of 2:4:4) were used to manufacture a coin cell.

**Example 2**

A coin cell was manufactured according to the same method as Example 1 except that in Example 1-2, the lithium nickel-based composite oxide, the manganese(III) oxide ($Mn_2O_3$), and the polyvinylidene fluoride (PVdF) were mixed in a mole ratio of 1:0.005:0.005 to prepare a metal hydroxide precursor and subsequently, a positive active material.

**Comparative Example 1**

A coin cell was manufactured according to the same method as Example 1 except that in Example 1-2, the manganese(III) oxide ($Mn_2O_3$) and the polyvinylidene fluoride (PVdF) were not added to the lithium nickel-based composite oxide to prepare a metal hydroxide precursor and subsequently, a positive active material.

**Comparative Example 2**

A coin cell was manufactured according to the same method as Example 1 except that in Example 1-2, the lithium nickel-based composite oxide and the polyvinylidene fluoride (PVdF) were mixed in a mole ratio of 1:0.0074 without adding the manganese(III) oxide ($Mn_2O_3$) to prepare a metal hydroxide precursor and subsequently, a positive active material.

**Comparative Example 3**

A coin cell was manufactured according to the same method as Example 1 except that in Example 1-2, the lithium nickel-based composite oxide and the manganese(III) oxide ($Mn_2O_3$) were mixed in a mole ratio of 1:0.005 without adding the polyvinylidene fluoride (PVdF) to prepare a metal hydroxide precursor and subsequently, a positive active material.

**Comparative Example 4**

An ammonia solution having a concentration of 0.5 mol/L was put in a reactor, and a reaction started at an agitation speed of 250 rpm at a reaction temperature of 50 °C. Subsequently, a metal raw material at 6 L/hr and an ammonia solution at 1.35 L/hr were simultaneously added thereto, and NaOH as a pH controller was added thereto to adjust pH into a range of 11.4 to 11.6. When the reaction was stabilized after performing the reaction for 33 hours, an overflowing reactant was collected. Herein, the metal raw material was dissolved in a sulfuric acid aqueous solution to have a ratio of nickel:cobalt:manganese = 6:2:2. The reactant was washed by using a filter press, until conductivity of water discharged after the washing became less than or equal to 20 $\mu$S/cm. The washed reactant was hot air-dried at about 150 °C for 24 hours to obtain a metal hydroxide precursor ($Ni_{0.6}Co_{0.2}Mn_{0.2}(OH)_2$).

A positive active material was prepared according to the same method as Example 1 and then, used to manufacture a coin cell except that the metal hydroxide precursor prepared in the aforementioned method was used.

**Evaluation Example 1:** Evaluation of Residual Lithium Content

Each residual lithium content of the positive active materials according to Examples 1 and 2 and Comparative Examples 1 to 4 was measured and provided in Table 1.

Unreacted residual lithium contents present on the surfaces of the positive active material were measured using an HCl titration method and specific measuring methods are as follows. 10 g of a positive active material was put in distilled water and then, stirred at 300 rpm for 30 minutes, and then, a solution part was taken therefrom, and a pH change thereof was measured, while HCl was put therein. Since the unreacted residual lithium was present as $Li_2CO_3$ and LiOH, $H^+$ and $CO_3^{2-}$ ions and $OH^-$ ions were reacted and reached a titration, when the HCl was added thereto, and accordingly, the unreacted residual lithium contents were obtained by measuring an amount of the put HCl solution.

(Table 1)

|  | Residual lithium content (ppm) (Li content in $Li_2CO_3$ & LiOH) |
|---|---|
| Example 1 | 966 |
| Example 2 | 963 |
| Comparative Example 1 | 1511 |
| Comparative Example 2 | 1050 |
| Comparative Example 3 | 1030 |
| Comparative Example 4 | 950 |

Referring to Table 1, the positive active materials according to Examples 1 and 2 sharply reduced unreacted residual lithium by including lithium manganese-based composite oxide and simultaneously, forming a surface-modifying layer including lithium fluoride on the surface of the lithium nickel-based composite oxide.

On the contrary, the positive active material of Comparative Example 1 included the lithium nickel-based composite oxide alone and showed no residual lithium removal effect. On the other hand, since Comparative Example 2 included the surface-modifying layer including lithium fluoride on the surface of the lithium nickel-based oxide in the positive active material, and Comparative Example 3 included the lithium nickel-based composite oxide and lithium manganese-based composite oxide alone in the positive active material, the residual lithium removal effect was deteriorated compared with Examples 1 and 2.

On the other hand, Comparative Example 4 included no secondary particles having a developed surface orientation in the positive active material and thus showed a small residual lithium amount on the surface of the positive active material.

**Evaluation Example 2:** Evaluation of Gas Generation Amount at High Temperature (80 °C)

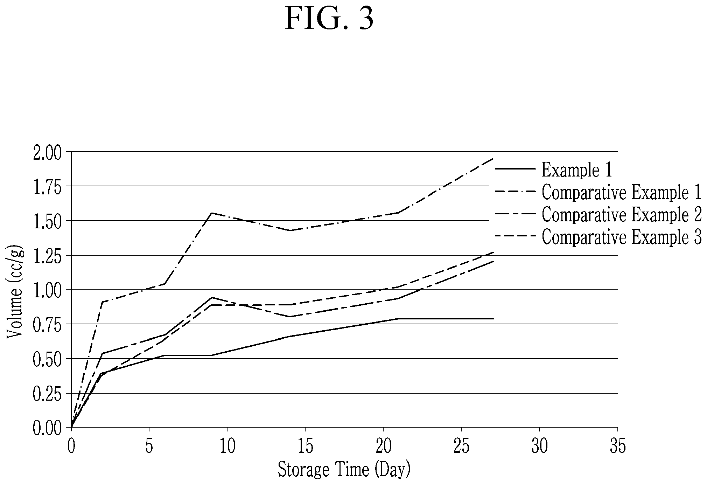

The coin cells according to Example 1 and Comparative Examples 1 to 3 were 0.1 C charged up to a voltage of 4.3 V (vs. Li) under a constant current condition at 25 °C and subsequently, 0.05 C cut off in a constant voltage mode while maintaining the 4.3 V. Subsequently, the coin cells were disassembled, and positive electrode plates separated therefrom were respectively put along with an electrolyte solution in a pouch and then, stored in an 80 °C oven. A mass change of the pouch was converted into a volume change in an Archimedes method, and the results are shown in FIG. 3.

On the other hand, the electrolyte solution was prepared by dissolving 1.5 M $LiPF_6$ in a mixed solvent of EC (ethylene carbonate), DEC (diethyl carbonate), and EMC (ethylmethyl carbonate) (a volume ratio of 2:4:4).

The Archimedes method is to measure a gas generation amount by measuring a weight of the pouch in a water tank filled with water by every particular period (e.g., 4 days) and converting a weight change into the volume change.

Referring to FIG. 3, the coin cell of Example 1 showed a reduced gas generation compared with the coin cells of Comparative Examples 1 to 3.

**Evaluation Example 3:** Evaluation of Charge and Discharge Characteristics

The coin cells according to Examples 1 and 2 and Comparative Examples 1 to 4 were 0.1 C charged to a voltage of 4.3 V (vs. Li) under a constant current condition at 25 °C and subsequently, 0.05 C cut off under a constant voltage condition while maintaining the 4.3 V. Subsequently, the coin cells were 0.1 C discharged to a voltage of 3.0 V (vs. Li) under the constant current condition (1st cycle). After the 1st cycle, the coin cells were 0.2 C charged to 4.3 V (vs. Li) under the constant current condition at 25 °C and subsequently, 0.05 C cut off under the constant voltage condition while maintaining the 4.3 V. Subsequently, the coin cells were 0.2 C discharged to a voltage of 3.0 V (vs. Li) under the constant current condition (2nd cycle). After the 2nd cycle, the coin cells were 0.5 C charged to a voltage of 4.3 V (vs. Li) under the constant current condition at 25 °C and subsequently, 0.05 C cut off under the constant voltage condition while maintaining the 4.3 V. Subsequently, the coin cells were 0.2 C discharged to a voltage of 3.0 V (vs. Li) under the constant current condition (3rd cycle). In the following cycles (3rd to 7th cycles), the coin cells were charged equally to the 3rd cycle and then, discharged at 0.33 C (4th cycle), 0.5 C (5th cycle), 1.0 C (6th cycle), and 2.0 C (7th cycle). In all the charge and discharge cycles, a pause of 10 minutes was set after each charge/discharge cycle. The initial charge and discharge experiment result, initial charge and discharge efficiency according to Equation 1, and rate capability are shown in Table 2.

[Equation 1]

Initial charge and discharge efficiency (I.C.E)

= [first discharge capacity / first charge capacity] × 100

(Table 2)

| | 1 st cycle | | | Rate capability (mAh/g) | | | | |
|---|---|---|---|---|---|---|---|---|
| | Charge capacity (mAh/g) | Discharge capacity (mAh/g) | Efficiency (%) | 0.2C | 0.33C | 0.5C | 1C | 2C |
| Example 1 | 197.6 | 188.7 | 95.5 | 183.2 | 180.7 | 179.7 | 174.3 | 167.3 |
| Example 2 | 197.5 | 187.8 | 95.1 | 182.2 | 179.9 | 174.5 | 167.8 | 163.2 |
| Comparative Example 1 | 197.1 | 185.9 | 94.3 | 183.1 | 180.3 | 178.2 | 172.7 | 166.1 |
| Comparative Example 2 | 197.6 | 185.5 | 93.9 | 182.8 | 179.8 | 177.1 | 171.5 | 164.1 |
| Comparative Example 3 | 197.6 | 188.4 | 95.3 | 185.3 | 182.3 | 179.6 | 173.4 | 165.6 |
| Comparative Example 4 | 196.9 | 176.2 | 89.5% | 173.0 | 170.1 | 167.4 | 162.3 | 156.3 |

Referring to Table 2, the coin cells respectively including the positive active materials according to Examples 1 and 2 exhibited improved or at least equivalent initial charge and discharge efficiency and rate capability characteristics compared with the coin cells respectively including the positive active material including lithium nickel-based composite oxide alone according to Comparative Example 1, the positive active material having a modifying layer including lithium fluoride on the surface of the lithium nickel-based composite oxide according to Comparative Example 2, and the positive active material including a mixture of lithium nickel-based oxide and lithium manganese composite oxide according to Comparative Example 3.

On the other hand, the positive active material according to Comparative Example 4 included no secondary particles having a developed surface orientation and thus showed low initial charge and discharge efficiency and relatively small capacity compared with those of Examples.

**Evaluation Example 4:** Evaluation of Cycle-life Characteristics at High Temperature

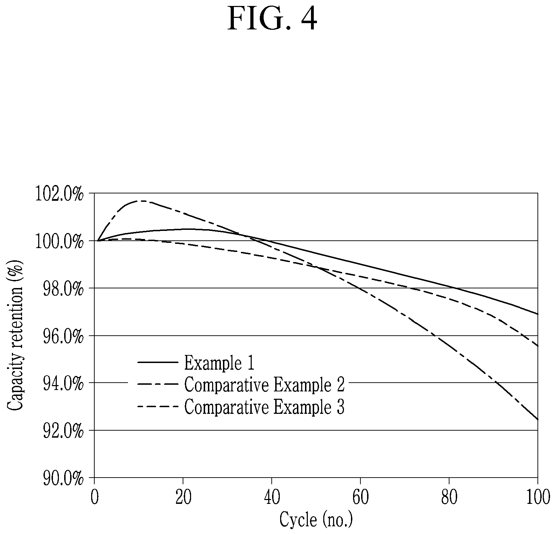

The coin cells after the 1st cycle in Evaluation Example 3 were 1.0 C charged to a voltage of 4.3 V (vs. Li) under the constant current condition at 45 °C and 0.05 C cut off under the constant voltage condition while maintaining 4.3 V. Subsequently, the coin cells were 1.0 C discharged to a voltage of 3.0 V (vs. Li) under the constant current condition, and this cycle was repeated up to 100th cycle. In all the charge and discharge cycles, a pause of 10 minutes was set after every charge/discharge cycle. As the charge and discharge experiment result, cycle capacity retentions are shown in FIG. 4, and a 100th cycle capacity retention calculated according to Equation 2 and a capacity decrease rate at the 100th cycle relative to the 10th cycle calculated according to Equation 3 are respectively shown in Table 3.

[Equation 2]

Capacity retention at 100th cycle [%] = [discharge capacity at 100th cycle/discharge capacity at 1st cycle] × 100

[Equation 3]

Capacity decrease rate [%] at 100th cycle relative to 10th cycle = [(discharge capacity at 10th cycle - discharge capacity at 100th cycle) / discharge capacity at 10th cycle] × 100

(Table 3)

|  | Capacity retention (%) at 100th cycle | Capacity decrease rate (%) at 100th cycle relative to 10th cycle capacity |
|---|---|---|
| Example 1 | 96.8 | 3.46 |
| Comparative Example 2 | 92.5 | 9.05 |
| Comparative Example 3 | 95.6 | 4.46 |

Referring to Table 3 and FIG. 4, Example 1 exhibited excellent high temperature cycle-life characteristics by effectively removing a lithium byproduct on the surface of the lithium nickel-based composite oxide having the surface orientation of Comparative Example 1 compared with Comparative Examples 2 and 3.
In addition, Example 1 exhibited an improved capacity decrease rate of the 100th cycle relative to the 10th cycle as well as an improved 100th cycle capacity retention compared with Comparative Examples 2 and 3.

**Evaluation Example 5:** XPS (X-ray photoelectron Spectroscopy) Analysis and TOF-SIMS (Time-of-Flight Secondary Ion Mass Spectrometry) Analysis

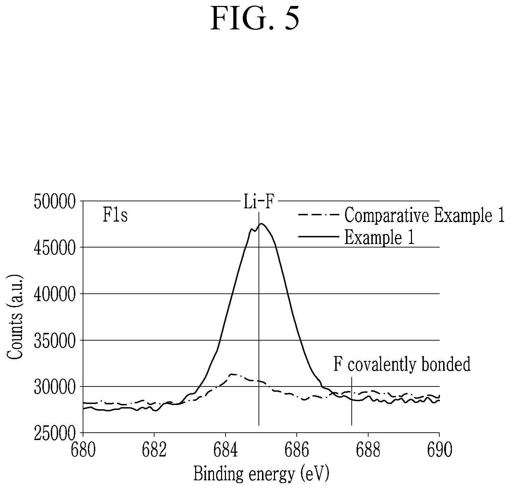

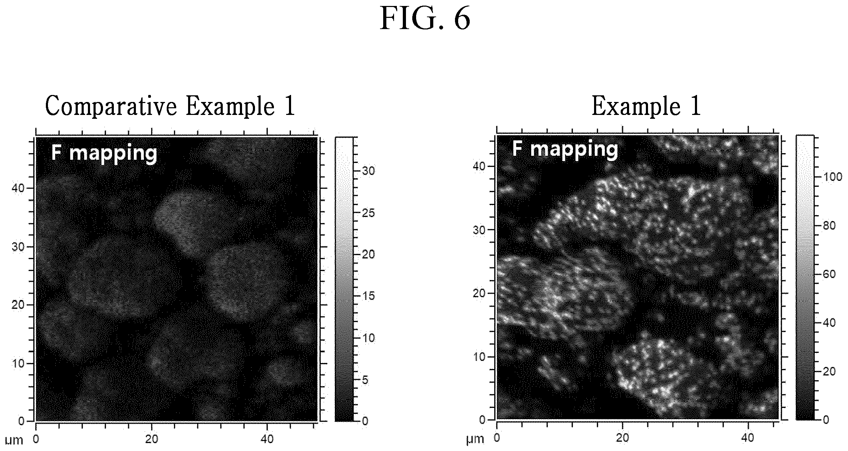

XPS binding energy peaks (spectra) of the positive active materials according to Example 1 and Comparative Example 1 were measured, and the surfaces thereof were analyzed by using TOF-SIMS. Each analysis result is shown in FIGS. 5 and 6.
Referring to FIG. 5, the positive active material of Example 1 showed a peak corresponding to binding energy of lithium fluoride (LiF), but the positive active material of Comparative Example 1 showed no peak.
Referring to FIG. 6, in the positive active material of Example 1, F elements were relatively more frequently distributed as particles (F element mapping) on the surface thereof than on the surface of the positive active material of Comparative Example 1.
Referring to the results, the positive active material of Example 1 included lithium fluoride (LiF) on the surface, but the positive active material of Comparative Example 1 included almost no F element or if included, in an impurity level.

**Evaluation Example 6:** Measurement of Scanning Electron Microscope (SEM) Image

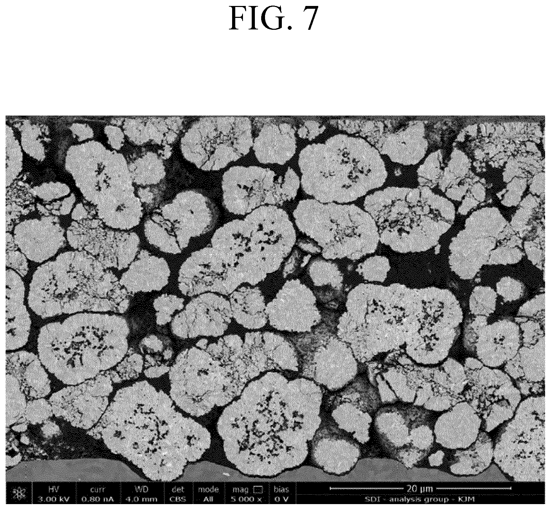

FIG. 7 is a scanning electron microscope (SEM) image of the positive active material prepared according to Example 1.
Referring to FIG. 7, the positive active material according to Example 1 includes a secondary particle in which a plurality of plate-shaped primary particles are agglomerated, and the secondary particle has a single-centered radial arrangement having one center or a multi-centered radial array structure having a plurality of centers.

While this invention has been described in connection with what is presently considered to be practical example embodiments, it is to be understood that the invention is not limited to the disclosed embodiments.

### <Description of Symbols>

| | | | |
|---|---|---|---|
| 10: | primary particle | 20: | secondary particle |
| 31: | rechargeable lithium battery | 32: | negative electrode |
| 33: | positive electrode | 34: | separator |
| 35: | battery case | 36: | cap assembly |

## Claims

1. A positive active material for a rechargeable lithium battery, comprising

   a lithium nickel-based composite oxide,
   the lithium nickel-based composite oxide comprises a secondary particle (20) in which a plurality of plate-shaped primary particles (10) are agglomerated
   **characterized in that**
   the secondary particle (20) has a regular array structure where (003)-planes of plate-shaped primary particles (10) oriented in a vertical direction with respect to the surface of the secondary particle (20), and
   a lithium manganese composite oxide having two types or more of crystal structures, and
   the surface-modifying layer comprising lithium fluoride is on the surface of at least one of the lithium nickel-based composite oxide and the lithium manganese composite oxide.

2. The positive active material of claim 1, wherein the secondary particle (20) has a one-centered radial arrangement having one center or a multi-centered radial array structure having a plurality of centers.

3. The positive active material of one of the claims 1 to 2, wherein the lithium nickel-based composite oxide has a porosity of 1 % to 8 %, preferably of 2 % to 7 %, more preferably of 4 % to 6%, and/or a specific surface area of 0.4 $m^2/g$ to 1.0 $m^2/g$, preferably of 0.5 $m^2/g$ to 0.9 $m^2/g$, more preferably of 0.6 $m^2/g$ to 0.8 $m^2/g$.

4. The positive active material of one of the claims 1 to 3, wherein the positive active material comprises 1,000 ppm or less of unreacted residual lithium at the surface thereof.

5. The positive active material of claims 1 to 4, wherein the positive active material comprises 1,000 ppm or less of unreacted residual lithium at the surface of the lithium nickel-based composite oxide.

6. The positive active material of one of the claims 1 to 5, wherein the lithium manganese composite oxide is present on the surface of the lithium nickel-based composite oxide.

7. The positive active material of one of the claims 1 to 6, wherein the lithium manganese composite oxide is represented by Chemical Formula 1:

   [Chemical Formula 1] $\quad\quad xLiMnO_2 \cdot yLi_4Mn_5O_{12} \cdot zLiMn_2O_4 \cdot (1-x-y-z)Li_2MnO_3$

   wherein, in Chemical Formula 1, $0\leq x<1$, $0\leq y<1$, $0\leq z<1$, $0<y+z<1$, and $0<x+y+z<1$.

8. The positive active material of one of the claims 1 to 7, wherein the lithium manganese composite oxide has a cubic crystal structure and a monoclinic crystal structure or the lithium manganese composite oxide has a cubic crystal structure, a monoclinic crystal structure and an orthorhombic crystal structure, wherein

   the lithium manganese composite oxide having the cubic crystal structure is at least one of $LiMn_2O_4$ and $Li_4Mn_5O_{12}$,
   the lithium manganese composite oxide having the monoclinic crystal structure is $Li_2MnO_3$, and
   the lithium manganese composite oxide having the orthorhombic crystal structure is $LiMnO_2$.

9. The positive active material of one of the claims 1 to 8, wherein the lithium manganese composite oxide has an average particle diameter (D50) of less than or equal to 10 $\mu$m, preferably less than or equal to 8 $\mu$m, more preferably less than or equal to 6 $\mu$m, and/or wherein the lithium manganese composite oxide is included in an amount of 0.25 mol to 1.5 mol, preferably of 0.3 mol to 1.2 mol, more preferably of 0.4 mol to 1.0 mol based on 100 mol of the lithium nickel-based composite oxide.

10. The positive active material of one of the claims 1 to 9, wherein the lithium fluoride is present in a particle shape, and/or wherein the lithium fluoride is included in an amount of 0.25 mol to 1.0 mol based on 100 mol of the lithium nickel-based composite oxide, preferably of 0.3 mol to 0.8 mol, more preferably of 0.4 mol to 0.6 mol.

11. A method of preparing the positive active material for a rechargeable lithium battery, comprising

mixing a metal hydroxide precursor and a lithium source to prepare a first mixture;
first heat-treating the first mixture under a high temperature condition to prepare a first fired product including a lithium nickel-based composite oxide and residual lithium;
mixing the first fired product with manganese-based oxide and a fluorine-based organic material to prepare a second mixture; and
second heat-treating the second mixture to prepare the positive active material of claim 1.

12. The method of claim 11, wherein the first heat-treating is performed at 750 °C to 950 °C, preferably at 775 °C to 925 °C, more preferably at 800 °C to 900 °C and/or wherein the second heat-treating is performed at 350 °C to 450 °C, preferably at 370 °C to 430 °C, more preferably at 390 °C to 410 °C.

13. The method of one of the claims 11 to 12, wherein the manganese-based oxide is mixed in an amount of 0.25 to 1.5 mol, preferably of 0.3 mol to 1.2 mol, more preferably of 0.4 mol to 1.0 mol, based on 100 mol of the lithium nickel-based composite oxide, and/or wherein the fluorine-based organic material is mixed in an amount of 0.25 to 1.0 mol, preferably of 0.3 mol to 0.8 mol, more preferably of 0.4 mol to 0.6 mol, based on 100 mol of the lithium nickel-based composite oxide.

14. The method of one of the claims 11 to 13, wherein the manganese-based oxide is at least one of $Mn_2O_3$, MnO, and $MnO_2$, and/or wherein the fluorine-based organic material is at least one of polyvinylidene fluoride (PVdF), polyvinyl fluoride (PVF), and polytetrafluoro ethylene (PTFE).

15. A rechargeable lithium battery (31), comprising

a positive electrode (33) comprising the positive active material of one of the claims 1 to 10;
a negative electrode (32); and
an electrolyte.

**Patentansprüche**

1. Positives aktives Material für eine wiederaufladbare Lithiumbatterie, umfassend

ein Verbundoxid auf Lithium-Nickel-Basis,
wobei das Verbundoxid auf Lithium-Nickel-Basis ein Sekundärteilchen (20) umfasst, in dem eine Vielzahl von plättchenförmigen Primärteilchen (10) agglomeriert sind,
**dadurch gekennzeichnet, dass**
das Sekundärteilchen (20) eine regelmäßige Anordnungsstruktur aufweist, in der (003)-Ebenen plattenförmiger Primärteilchen (10) in einer vertikalen Richtung in Bezug auf die Oberfläche des Sekundärteilchens (20) ausgerichtet sind, und
ein Lithium-Mangan-Verbundoxid zwei oder mehr Typen von Kristallstrukturen aufweist, und
die oberflächenmodifizierende Schicht, die Lithiumfluorid enthält, sich auf der Oberfläche des Verbundoxids auf Lithium-Nickel-Basis und/oder des Lithium-Mangan-Verbundoxids befindet.

2. Positives aktives Material nach Anspruch 1, wobei das Sekundärteilchen (20) eine einzentrige radiale Anordnung mit einem Zentrum oder eine multizentrische radiale Array-Struktur mit einer Vielzahl von Zentren aufweist.

3. Positives aktives Material nach einem der Ansprüche 1 bis 2, wobei das Verbundoxid auf Lithium-Nickel-Basis eine Porosität von 1 % bis 8 %, vorzugsweise von 2 % bis 7 %, besonders bevorzugt von 4 % bis 6 %, und/oder eine spezifische Oberfläche von 0,4 $m^2$/g bis 1,0 $m^2$/g, vorzugsweise von 0,5 $m^2$/g bis 0,9 $m^2$/g, besonders bevorzugt von 0,6 $m^2$/g bis 0,8 $m^2$/g aufweist.

4. Positives aktives Material nach einem der Ansprüche 1 bis 3, wobei das positive aktive Material 1000 ppm oder weniger an nicht umgesetztem Restlithium an seiner Oberfläche aufweist.

5. Positives aktives Material nach einem der Ansprüche 1 bis 4, wobei das positive aktive Material 1000 ppm oder weniger an nicht umgesetztem Restlithium an der Oberfläche des Verbundoxids auf Lithium-Nickel-Basis aufweist.

6. Ppositives aktives Material nach einem der Ansprüche 1 bis 5, wobei das Lithium-Mangan-Verbundoxid auf der Oberfläche des Verbundoxids auf Lithium-Nickel-Basis vorhanden ist.

7. Positives aktives Material nach einem der Ansprüche 1 bis 6, wobei das Lithium-Mangan-Verbundoxid durch die chemische Formel 1 dargestellt wird:

[Chemische Formel 1]     $xLiMnO_2 - yLi_4Mn_5O_{12} - zLiMn_2O_4 - (1-x-y-z)Li_2MnO_3$

wobei in der chemischen Formel 1 $0 \leq x < 1$, $0 \leq y < 1$, $0 \leq z < 1$, $0 < y+z < 1$, und $0 < x+y+z < 1$.

8. Positives aktives Material nach einem der Ansprüche 1 bis 7, wobei das Lithium-Mangan-Verbundoxid eine kubische Kristallstruktur und eine monokline Kristallstruktur aufweist oder das Lithium-Mangan-Verbundoxid eine kubische Kristallstruktur, eine monokline Kristallstruktur und eine orthorhombische Kristallstruktur aufweist, wobei

das Lithium-Mangan-Verbundoxid mit der kubischen Kristallstruktur mindestens eines von $LiMn_2O_4$ und $Li_4Mn_5O_{12}$ ist,
das Lithium-Mangan-Verbundoxid mit der monoklinen Kristallstruktur $Li_2MnO_3$ ist, und
das Lithium-Mangan-Verbundoxid mit der orthorhombischen Kristallstruktur $LiMnO_2$ ist.

9. Positives aktives Material nach einem der Ansprüche 1 bis 8, wobei das Lithium-Mangan-Verbundoxid einen durchschnittlichen Teilchendurchmesser (D50) von weniger als oder gleich 10 $\mu$m, vorzugsweise von weniger als oder gleich 8 $\mu$m, besonders bevorzugt von weniger als oder gleich 6 $\mu$m, aufweist und/oder wobei das Lithium-Mangan-Verbundoxid in einer Menge von 0.25 mol bis 1,5 mol, vorzugsweise von 0,3 mol bis 1,2 mol, besonders bevorzugt von 0,4 mol bis 1,0 mol, bezogen auf 100 mol des Verbundoxids auf Lithium-Nickel-Basis, enthalten ist.

10. Positives aktives Material nach einem der Ansprüche 1 bis 9, wobei das Lithiumfluorid in einer Teilchenform vorliegt und/oder wobei das Lithiumfluorid in einer Menge von 0,25 mol bis 1,0 mol, bezogen auf 100 mol des Verbundoxids auf Lithium-Nickel-Basis, vorzugsweise von 0,3 mol bis 0,8 mol, besonders bevorzugt von 0,4 mol bis 0,6 mol enthalten ist.

11. Verfahren zur Herstellung des positiven aktiven Materials für eine wiederaufladbare Lithiumbatterie, umfassend

Mischen eines Metallhydroxid-Vorläufers und einer Lithiumquelle zur Herstellung einer ersten Mischung;
erstes Wärmebehandeln der ersten Mischung unter Hochtemperaturbedingungen zur Herstellung eines ersten gebrannten Produkts, das ein Verbundoxid auf Lithium-Nickel-Basis und Restlithium enthält;
Mischen des ersten gebrannten Produkts mit Oxid auf Manganbasis und einem organischen Material auf Fluorbasis zur Herstellung eines zweiten Gemischs; und
zweites Wärmebehandeln der zweiten Mischung zur Herstellung des positiven aktiven Materials nach Anspruch 1.

12. Verfahren nach Anspruch 11, wobei die erste Wärmebehandlung bei 750 °C bis 950 °C, vorzugsweise bei 775 °C bis 925 °C, besonders bevorzugt bei 800 °C bis 900 °C durchgeführt wird und/oder wobei die zweite Wärmebehandlung bei 350 °C bis 450 °C, vorzugsweise bei 370 °C bis 430 °C, besonders bevorzugt bei 390 °C bis 410 °C durchgeführt wird.

13. Verfahren nach einem der Ansprüche 11 bis 12, wobei das Oxid auf Manganbasis in einer Menge von 0,25 bis 1,5 mol, vorzugsweise von 0,3 mol bis 1,2 mol, besonders bevorzugt von 0,4 mol bis 1.0 mol, bezogen auf 100 mol des Verbundoxids auf Lithium-Nickel-Basis, gemischt ist, und/oder wobei das organische Material auf Fluorbasis in einer Menge von 0,25 bis 1,0 mol, vorzugsweise von 0,3 mol bis 0,8 mol, besonders bevorzugt von 0,4 mol bis 0,6 mol, bezogen auf 100 mol des Verbundoxids auf Lithium-Nickel-Basis, gemischt ist.

**14.** Verfahren nach einem der Ansprüche 11 bis 13, wobei das Oxid auf Manganbasis mindestens eines von $Mn_2O_3$, $MnO$ und $MnO_2$ ist, und/oder wobei das organische Material auf Fluorbasis mindestens eines von Polyvinylidenfluorid (PVdF), Polyvinylfluorid (PVF) und Polytetrafluorethylen (PTFE) ist.

**15.** Wiederaufladbare Lithiumbatterie (31), umfassend

eine positive Elektrode (33), die das positive aktive Material nach einem der Ansprüche 1 bis 10 enthält;
eine negative Elektrode (32); und
einen Elektrolyt.

**Revendications**

**1.** Matériau actif positif pour une batterie rechargeable au lithium, comprenant

un oxyde composite à base de lithium et de nickel,
lequel oxyde composite à base de lithium et de nickel comprend une particule secondaire (20) dans laquelle une pluralité de particules primaires en forme de plaque (10) sont agglomérées,
**caractérisé en ce que**
la particule secondaire (20) a une structure en réseau régulière où les plans (003) de particules primaires en forme de plaque (10) sont orientés dans la direction verticale par rapport à la surface de la particule secondaire (20), et
un oxyde composite de lithium et de manganèse ayant deux ou plus de deux types de structures cristallines, et la couche de modification de surface comprenant du fluorure de lithium est sur la surface d'au moins l'un parmi l'oxyde composite à base de lithium et de nickel et l'oxyde composite de lithium et de manganèse.

**2.** Matériau actif positif selon la revendication 1, dans lequel la particule secondaire (20) a un agencement radial mono-centré ayant un seul centre, ou une structure en réseau radiale multi-centrée ayant une pluralité de centres.

**3.** Matériau actif positif selon l'une des revendications 1 et 2, dans lequel l'oxyde composite à base de lithium et de nickel a une porosité de 1 % à 8 %, de préférence de 2 % à 7 %, mieux encore de 4 % à 6 %, et/ou une surface spécifique de 0,4 $m^2$/g à 1,0 $m^2$/g, de préférence de 0,5 $m^2$/g à 0,9 $m^2$/g, mieux encore de 0,6 $m^2$/g à 0,8 $m^2$/g.

**4.** Matériau actif positif selon l'une des revendications 1 à 3, lequel matériau actif positif comprend 1 000 ppm ou moins de lithium résiduel n'ayant pas réagi à la surface de celui-ci.

**5.** Matériau actif positif selon l'une des revendications 1 à 4, lequel matériau actif positif comprend 1 000 ppm ou moins de lithium résiduel n'ayant pas réagi à la surface de l'oxyde composite à base de lithium et de nickel.

**6.** Matériau actif positif selon l'une des revendications 1 à 5, dans lequel l'oxyde composite de lithium et de manganèse est présent sur la surface de l'oxyde composite à base de lithium et de nickel.

**7.** Matériau actif positif selon l'une des revendications 1 à 6, dans lequel l'oxyde composite de lithium et de manganèse est représenté par la formule chimique 1 :

[formule chimique 1] $\quad$ $xLiMnO_2 \bullet yLi_4Mn_5O_{12} \bullet zLiMn_2O_4 \bullet (1-x-y-z)Li_2MnO_3$

dans lequel, dans la formule chimique 1, $0 \leq x < 1$, $0 \leq y < 1$, $0 \leq z < 1$, $0 < y+z < 1$, et $0 < x+y+z < 1$.

**8.** Matériau actif positif selon l'une des revendications 1 à 7, dans lequel l'oxyde composite de lithium et de manganèse a une structure cristalline cubique et une structure cristalline monoclinique ou bien l'oxyde composite de lithium et de manganèse a une structure cristalline cubique, une structure cristalline monoclinique et une structure cristalline orthorhombique, dans lequel

l'oxyde composite de lithium et de manganèse ayant la structure cristalline cubique est au moins l'un parmi $LiMn_2O_4$ et $Li_4Mn_5O_{12}$,
l'oxyde composite de lithium et de manganèse ayant la structure cristalline monoclinique est $Li_2MnO_3$, et
l'oxyde composite de lithium et de manganèse ayant la structure cristalline orthorhombique est $LiMnO_2$.

9. Matériau actif positif selon l'une des revendications 1 à 8, dans lequel l'oxyde composite de lithium et de manganèse a une granulométrie moyenne (D50) inférieure ou égale à 10 $\mu$m , de préférence inférieure ou égale à 8 $\mu$m , mieux encore inférieure ou égale à 6 $\mu$m, et/ou dans lequel l'oxyde composite de lithium et de manganèse est inclus en une quantité de 0,25 mol à 1,5 mol, de préférence de 0,3 à 1,2 mol, mieux encore de 0,4 mol à 1,0 mol pour 100 mol de l'oxyde composite à base de lithium et de nickel.

10. Matériau actif positif selon l'une des revendications 1 à 9, dans lequel le fluorure de lithium est présent sous une forme particulaire, et/ou dans lequel le fluorure de lithium est inclus en une quantité de 0,25 mol à 1,0 mol, de préférence de 0,3 mol à 0,8 mol, mieux encore de 0,4 mol à 0,6 mol, pour 100 mol de l'oxyde composite à base de lithium et de nickel.

11. Procédé de préparation d'un matériau actif positif pour une batterie rechargeable au lithium, comprenant

le mélange d'un précurseur d'hydroxyde métallique et d'une source de lithium pour préparer un premier mélange ;
un premier traitement à la chaleur du premier mélange dans des conditions de température élevée pour préparer un premier produit cuit contenant un oxyde composite à base de lithium et de nickel et du lithium résiduel ;
le mélange du premier produit cuit avec un oxyde à base de manganèse et un matériau organique à base de fluor pour préparer un deuxième mélange ; et
un deuxième traitement à la chaleur du deuxième mélange pour préparer le matériau actif positif de la revendication 1.

12. Procédé selon la revendication 11, dans lequel le premier traitement à la chaleur est effectué à une température de 750 °C à 950 °C, de préférence de 775 °C à 925 °C, mieux encore de 800 °C à 900 °C, et/ou dans lequel le deuxième traitement à la chaleur est effectué à une température de 350 °C à 450 °C, de préférence de 370 °C à 430 °C, mieux encore de 390 °C à 410 °C.

13. Procédé selon l'une des revendications 11 et 12, dans lequel l'oxyde à base de manganèse est mélangé en une quantité de 0,25 à 1,5 mol, de préférence de 0,3 mol à 1,2 mol, mieux encore de 0,4 mol à 1,0 mol, pour 100 mol de l'oxyde composite à base de lithium et de nickel, et/ou dans lequel le matériau organique à base de fluor est mélangé en une quantité de 0,25 à 1,0 mol, de préférence de 0,3 mol à 0,8 mol, mieux encore de 0,4 mol à 0,6 mol, pour 100 mol de l'oxyde composite à base de lithium et de nickel.

14. Procédé selon l'une des revendications 11 à 13, dans lequel l'oxyde à base de manganèse est au moins l'un parmi $Mn_2O_3$, MnO et $MnO_2$, et/ou dans lequel le matériau organique à base de fluor est au moins l'un parmi le poly(fluorure de vinylidène) (PVdF), le poly(fluorure de vinyle) (PVF), et le polytétrafluoroéthylène (PTFE).

15. Batterie rechargeable au lithium (31) comprenant

une électrode positive (33) comprenant le matériau actif positif de l'une des revendications 1 à 10 ;
une électrode négative (32) ; et
un électrolyte.

# FIG. 1

# FIG. 2

FIG. 3

# FIG. 4

# FIG. 5

# FIG. 6

Comparative Example 1

Example 1

EP 3 689 826 B1

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190014092
- US 20160211517 A1
- US 20150287984 A1

**Non-patent literature cited in the description**

- **LIUJIANG XI et al.** Layered Li2MnO3.3LiNi0.5-xMn0.5-xCo2xO2 microspheres with Mn-rich cores as high performance cathode material for lithium ion batteries. *Physical Chemistry Chemical Physics,* 2013, vol. 15, 16579-16585
- **W.C. WEST et al.** Preparation of high quality layered-layered composite Li2MnO3-LiMO2 (M=Mn, Co, Ni) Li-ion cathodes by ball milling-annealing process. *Journal of Power Sources,* 2012, vol. 204, 200-204
- **DONGHAN KIM et al.** Layered-layered-spinel cathode structures for lithium-ion batteries. *Journal of Electrochemical society,* 2013, vol. 160 (1), 31-38